# EUROPEAN PATENT APPLICATION

(11) **EP 1 633 122 A2**
(43) Date of publication of application: **08.03.2006**
(21) Application number: 05017994.4
(22) Date of filing: 18.08.2005
(51) Int. Cl.: H04M 15/00

(54) **Server for delivering content by the separate delivery method**

(30) Priority: 27.08.2004 JP 2004248560; 27.08.2004 JP 2004248561
(71) Applicant: Vodafone K.K., Minato-ku Tokyo 105-6205 (JP)
(72) Inventor: Suga, Hideaki, Tokyo 105-6205 (JP)
(74) Representative: Grünecker, Kinkeldey, Stockmair & Schwanhäusser Anwaltssozietät

(57) **Abstract**

The present invention performs efficient charging and notification to the content provider and the like that content has been delivered for delivery of content by the separate delivery method.

The DRM platform creates a download descriptor DD in accordance with the '(5) DD Request' from a mobile terminal UE, and sends a download descriptor DD to the UE. The mobile terminal UE sends a media object (MO) download request '(7) MO Req' based on the download descriptor DD, and receives delivery of the MO '(8) MO Res' from the content provider. The DRM platform receiving a download complete notification '(9) Install Notify' indicating that reception of the MO from the UE is complete delivers a corresponding rights object (RO) to the UE by WAP push '(11) RO Delivery'. A PPG 9 receiving a '(12) Delivery Receipt' from the UE sends the 'Delivery Report' to the DRM platform, and the DRM platform sends a charging notification '(13) Charging Notify' to a web gateway (WGW), and sends a notification of completion of delivery of content '(14) CP Notify' to the content provider and the like.

## Description

### TECHNICAL FIELD

The present invention relates to a server in a mobile communications system that can be connected to the Internet from a mobile terminal such as a mobile phone and the like.

### BACKGROUND ART

Mobile phone services known as 'third generation' are gradually being introduced in recent years. Standardization wherein the same mobile terminals can be used in common worldwide in these third generation mobile communications systems is progressing, with standards such as WAP (Wireless Application Protocol) and MMS (Multimedia Messaging Service) being adopted as common specifications (see the WAP Forum Ltd., 'WAP 2.0 Technical White Paper', [online], (2002.01.18), [April 28th, 2004 search], Internet <URL: http://www.wapforum.org/what/WAPWhite_Paperl.pdf>). WAP and MMS-compatible mobile terminals are hereafter known simply as 'WAP-compatible terminals'.

Copyright management for these WAP-compatible terminals is based on OMA DRM (OMA Digital Rights Management) Version 1.0. OMA DRM is a specification for digital rights management established by the Open Mobile Alliance (OMA) being an organization for standardization of applications for mobile phones and the like (see Open Mobile Alliance, 'OMA Digital Rights Management version 1.0', [online], [April 28th, 2004 search], Internet <URL: http://www.openmobilealliance.org/tech/release.html>).

Three specifications, being (1) Forward Lock, (2) Combined Delivery, and (3) Separate Delivery, have been regulated for content delivery methods in OMA DRM Version 1.0.
(1) Forward lock is a method in which transfer of acquired content is not permitted.
(2) Combined delivery is a method in which rights (setting of use rights) are added to the forward lock content, and delivered. Constraints such as the use count and the use time limit (for example, usable only once, usable for five days) can be applied. Three rights, being the content use count (Count: the number of times the content can be used), the content usable period (Datetime: year/month/day/hour/minute/second, the time the content can be used from, and the time the content can be used to), and the content usable time (Interval: for example, five minutes after beginning use), can be specified.
(3) Separate delivery is a method in which encrypted content (Media Object (MO)), and the rights and key (decryption key) part (Rights Object (RO)), are delivered separately. Content may only be used when the media object and the rights object are present in the mobile terminal.

The media object (MO) content itself is encrypted, and the content IDs (CID: Content ID) and the like assigned to each content are applied. Furthermore, the rights object (RO) is a 'rights descriptor file' handled by the separate delivery method, and the use rights and key information (CEK: Content Encryption Key, information used for decrypting encrypted media objects) and the like for the content is noted. A plurality of rights objects may be set for a single media object.

Use rights for content in rights objects are defined with permission information defining content use rights, and constraints information defining the scope of content use rights. In OMA DRM Version 1.0, content play (Play), content display (Display), content execute (Execute), and content print (Print) are defined as the permission information, and content use count (Count), content usable period (Datetime), and content usable time (Interval) are defined as the constraint information.

Furthermore, methods of acquiring content include downloading from the web, getting memory cards on which content is stored, and the like, and delivery by e-mail and the like, however, since content cannot be used with content alone, super distribution can be realized.

### DISCLOSURE OF THE INVENTION

### Problem that the invention is intended to solve

When the third generation service is begun, both the mobile terminals compatible with the conventionally provided unique protocols of each mobile communications operator, and the WAP-compatible terminals, will exist.

Each mobile communications operator previously provided a unique service based on each respective unique protocol, however, in future, a service providing the same service for mobile terminals compatible with the unique specifications of conventional mobile communications operators is required not only for mobile terminals compatible with the unique specifications of each mobile communications operator, but for WAP-compatible terminals as well.

For example, with conventional services, charging was conducted after downloading of content was complete, however, with WAP-compatible terminals in which copyright is managed based on the OMA DRM, when the separate delivery method of delivering content is adopted, reasonable charging in which charging is conducted after downloading of content is complete, and content is in a usable status, is required.

Furthermore, with content providers providing content, acquisition of information on which user downloaded which content is required. However, since a user connected to the Internet from a mobile terminal is connected via a proxy server, it was not possible to immediately acquire information on which user downloaded which content. Slightly, this information could only be acquired based on statistical data from a web gateway (WGW) later.

Therefore, an object of the present invention is to provide a server which can reasonably conduct charging when content is delivered by the separate delivery method.

A further object of the present invention is to provide a server which can notify the content provider and the like of completion of delivery of rights objects to a mobile terminal.

### Means for Solving the Problem

To accomplish the afore-mentioned objects, the server of the present invention is connected to a gateway server conducting processing related to charging, and provided between a mobile communications network and an IP network such as the Internet and the like, and is a server delivering corresponding content in accordance with a content acquisition request from a mobile terminal by the separate delivery method, and has means for delivering the rights object to the mobile terminal when the content acquisition request from the mobile terminal is a rights object acquisition request, means for delivering a rights object corresponding to the media object to the mobile terminal after a download descriptor related to the media object is sent to the mobile terminal and a download complete notification (Install Notify) for the media object is received when the content acquisition request from the mobile terminal is an acquisition request for a media object and a rights object, and means for sending a charging notification (Charging Notify) to the gateway server after delivery of the rights object to the mobile terminal is complete, when content is chargeable.

Furthermore, the server of the present invention also has means for notifying the prescribed notification destination of completion of delivery of content (CP Notify) after delivery of the rights object to the mobile terminal is complete.

Furthermore, the server of the present invention verifies that delivery of the rights object to the mobile terminal is complete based on delivery status notification (Delivery Receipt) sent from the mobile terminal.

Furthermore, a plurality of gateway servers are provided, and means for sending the charging notification sends the charging notification to the gateway server corresponding to the mobile terminal.

Furthermore, the means for sending the charging notification uses a domain name indicating the region to which a user of the mobile terminal supplemented with the host header of the HTTP request from the mobile terminal belongs, and sends the charging notification to the gateway server corresponding to the mobile terminal.

Furthermore, the notification destination for notification of completion of delivery of content (CP Notify) is the notification destination noted in the download descriptor.

### Effect of the invention

According to the server of the present invention, since charging processing for the rights object is conducted after delivery of a rights object to the mobile terminal is complete, reasonable charging is possible even with DRM separate delivery.

Furthermore, even when a plurality of web gateways are provided for each region, charging notification to the corresponding web gateway is possible.

Furthermore, according to the server of the present invention, when delivery of a rights object to a mobile terminal is complete, this fact can be notified to a notification destination specified by a parameter, and the content provider and the like can know immediately that a rights object has been delivered.

Furthermore, since it is possible to know that content has been downloaded normally, it is possible to prevent duplicated downloading being permitted.

### BRIEF DESCRIPTION OF THE DRAWINGS

FIG. 1 is a block diagram showing the overall configuration of a system in which the server of the present invention is provided;
FIG. 2 shows the sequence when purchasing chargeable content being a media object and a rights object in a series of sequences;
FIG. 3 shows an example of screen displays on a mobile terminal when purchasing chargeable content being a media object and a rights object in a series of sequences;
FIG. 4 shows the sequence when purchasing chargeable content being only a rights object;
FIG. 5 shows an example of screen displays on a mobile terminal when purchasing chargeable content being only a rights object;
FIG. 6 shows the sequence when downloading free content being a media object and a rights object in a series of sequences;
FIG. 7 shows an example of screen displays on a mobile terminal when downloading free content being a media object and a rights object in a series of sequences;
FIG. 8 shows the sequence when downloading free content being only rights object; and
FIG. 9 shows an example of screen displays on a mobile terminal when downloading free content being only a rights object;

### BEST MODE FOR CARRYING OUT THE INVENTION

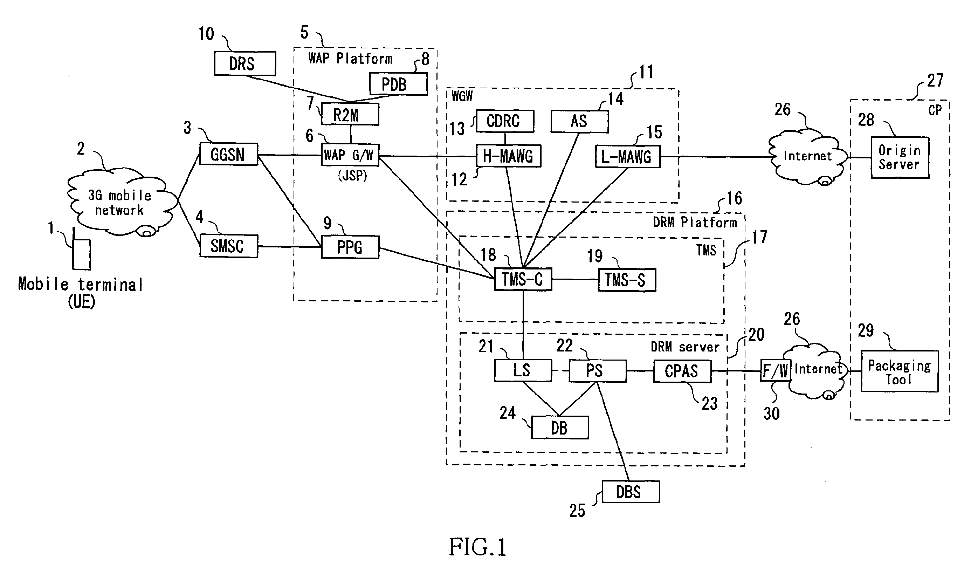

FIG. 1 is a block diagram showing an example of the overall configuration of a mobile communications system in which the server of the present invention is provided. Here, the configurations of the monitoring and maintenance systems are omitted for reasons of simplicity.

In this figure, 1 is a mobile terminal such as a mobile phone and the like (UE: User Equipment), 2 is a mobile communications network (3G mobile network) accommodating the mobile terminal 1 , 3 is an IP network gateway (GGSN: Gateway GPRS Support Node) between the mobile communications network 2 and the Internet and the like, and 4 is a short message service center (SMSC: Short Message Service Center) delivering short messages to the mobile terminal 1.

5 is a WAP platform provided to accommodate a WAP-compatible terminal, and has a server (WAP-GW/JSP) 6 having a WAP gateway (WAP-GW) terminating the WAP 2.0 protocol from the mobile terminal (UE) 1 and employing the HTTP (Hypertext Transfer Protocol) for transfer to the origin server, and a proxy server (JSP: J-Phone Scheme Proxy) coordinating the WAP standard functions and the expansion functions of the mobile communications operator , for example, converting received requests to the appropriate format and subsequently sending that request. The WAP platform 5 also includes various nodes such as an information management server (R2M: RADIUS & Repository Manager) 7 having a RADIUS server terminating the RADIUS accounting protocol from the GGSN 3 and managing session and creating session log for each user, and unitary managing user information and information related to mobile terminal capacity and the like required when a WAP/MMS service subscriber uses the web and e-mail and the like, a profile database server (PDB: Profile DB) 8 managing and holding user setup information (Selfcare Profile) and terminal information (UE Profile) required for a WAP subscriber using the web, and a push proxy gateway (PPG) 9 executing a push service for WAP push and e-mail notification delivery and the like.

Furthermore, 10 is a directory replica server (DRS) holding a copy of the stored content of a directory server unitary managing all subscriber information.

The R2M 7 is connected to the PDB 8 and the DRS 10, and provides user information (User Profile), mobile terminal information (UE Profile), and user agent profile information (UA Profile) and the like in accordance with requests from the WAP-GW/JSP 6.

A user agent in the mobile terminal corresponding to the unique specifications of the mobile communications operator sends the various types of HTTP expansion headers uniquely defined by the mobile communications operator, however, such expansion headers cannot be sent with WAP-compatible terminals. The WAP-GW/JSP 6 therefore uses the profile information stored in the R2M 7 to supplement insufficient mobile terminal information and the like in the expansion header of the received HTTP request, and sends this information to the subsequent node. Thus, an equivalent service to the service provided by the mobile terminal corresponding to the unique specifications of the mobile communications operator can also be provided to the WAP-compatible terminal.

11 is provided between the WAP-GW/JSP 6 and the Internet 26, is a web gateway (WGW) intermediate between requests from the mobile terminal 1 and the origin server, and also has processing functions related to management of service registration status and charging fees for information. As shown in the figure, this WGW 11 includes a proxy server (H-MAWG: H-Mobile Active Web Gateway) 12 conducting processing associated with special added value services such as acting as an agent and the like for recovery of fees for chargeable services, a CDR (Charging Data Record) collection server (CDRC: CDR Collector) 13 connected to the system conducting customer information management and processing for computing charges, a server (AS: Authentication Server) 14 conducting processing for the user authentication system, and a proxy server (L-MAWG) 15 providing a general web caching proxy function.

FIG. 1 shows only one WGW 11, however in practice, a WGW 11 corresponds to each region, and a plurality is provided in the system, and the mobile terminal 1 corresponding to the unique specifications of the mobile communications operator is connected to the Internet via the WGW 11 of the associated region. Furthermore, with WAP-compatible terminals, the WAP-GW/JSP 6 acquires the domain name indicating the region to which a user belongs from the R2M 7 based on the MSISDN (Mobile Station ISDN Number) or the IMSI (International Mobile Subscriber Identity) of the WAP-compatible terminal, and the acquired domain name supplements the host header of the HTTP request from the WAP-compatible terminal. Thus, the HTTP request from the WAP-compatible terminal is routed to the WGW 11 corresponding to the region with which a user is associated.

16 is a DRM platform for providing a service using DRM, and comprises various node groups of the TMS (Transaction Management Server) 17 and a DRM server 20. As shown in the figure, the TMS (Transaction Management Server) 17 managing DRM content transactions includes a content delivery control server (TMS-C: Transaction Management Server-Control) 18 controlling and the like requests from the mobile terminal 1, and a status transition management server (TMS-S: Transaction Management Server-Status) 19 managing the status in communications with the mobile terminal 1. The DRM server 20 includes a license server (LS) 21 generating and managing rights objects (RO) based on registered rights information, a packaging server (PS) 22 linked to a packaging tool (described below) controlling registration of content information and registration and the like of associated rights information, a server (CPAS: CP Authentication Server) 23 receiving access from a content provider (CP) 27 and intermediate between communications with the DRM platform 16, and a database server (DB) 24 holding information registered from the content provider (CP) 27 such as content information and rights information and the like, and service definition information and the like created by the mobile communications operator. The packaging server (PS) 22 is connected to a database synchronizer (DBS) 25 synchronizing web service between generations, and can use a node (SPM: Service and Provider Manager) to manage delivery of provider information and service information in the DBS 25.

The proxy server (L-MAWG) 15 in the WGW 11 is connected to the Internet 26, and a content provider (CP) 27 providing content in accordance with requests from a user is connected to the Internet 26.

A resource specified by the mobile terminal 1 and the like exists, or a created origin server 28 is provided, at the content provider 27. Furthermore, a packaging tool 29 conducting a sequence of processing converting content to DRM-compatible format (packaging) is distributed and the like from the mobile communications operator and the like, at the content provider 27.

The packaging tool 29 is connected to the CPAS 23 in the DRM server 20 via the Internet 26 and the firewall (F/W) 30, and can be linked to the server group in the DRM server 20 installed by the mobile communications operator to conduct content packaging.

In other words, the packaging tool 29 inputs raw content, the download destination URL (Rights Issuer URL) for rights information, and rights information, and in together with the license server LS 21 and the package server PS 22 and the like in the DRM platform 16, creates a DCF (DRM Content Format) file including encrypted content, and the associated license ID (LID). At this time, information such as key information, content information, and MIME type and the like are stored in the database server DB 24 in the DRM server 20.

Here, the license ID (LID) is an ID specifying a rights object (RO) binded to a media object (MO). The rights object (RO) may be delivered by specifying this ID.

The media object (MO) is downloaded with the download method defined by the OMA (OMA download). With this method, a download descriptor (DD) is acquired prior to downloading content so that notification of the type of content is possible prior to downloading. When downloading is complete, a download complete notification (Install Notify) can be sent to any desired URL. Here, the download descriptor is a file in which meta-data (content name, size, type, version and the like) related to the content (MO), the URL indicating the location of the content (ObjectURL), and the URL of the notification destination of the download complete notification (InstallNotifyURL) and the like are described.

On the other hand, the rights object (RO) is delivered to the mobile terminal 1 by WAP push from the license server LS 21 via the PPG 9.

In other words, the rights object can only be acquired by WAP push from the license server installed by the mobile communications operator.

Operation of a system configured in this manner is described using an example in which a user of the mobile terminal 1 downloads chargeable content from the origin server 28 of the content provider 27. In the following description, the mobile terminal 1 is a WAP-compatible terminal.

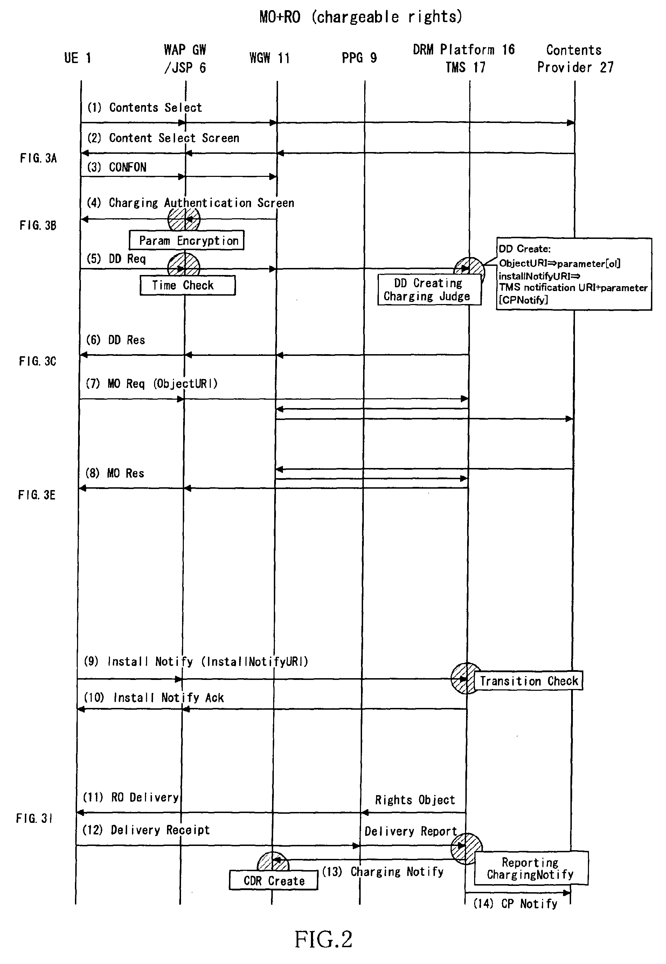

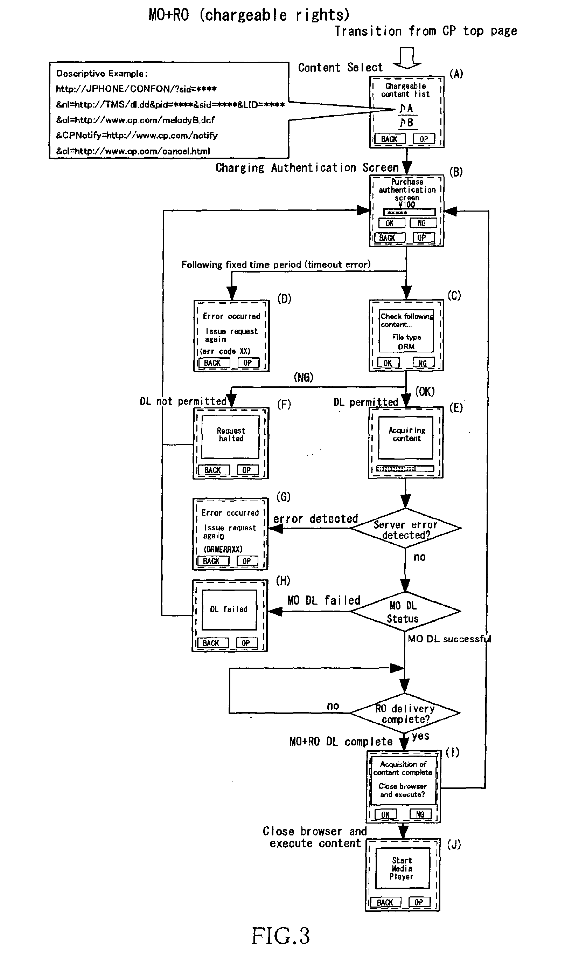

FIG. 2 shows a sequence in which a user of the mobile terminal 1 downloads chargeable content (rights charges (volume-related charges)) being a media object (MO) and a rights object (RO) in a series of sequences, and FIG. 3 shows an example of screen displays on the mobile terminal 1 at this time.

In FIG. 2, the mobile terminal 1 being a WAP-compatible terminal is connected to the Internet in accordance with the WAP sequence, and when a user requests '(1) Content Select' to select content from the content provider 27 for purchase, the '(2) Content Select Screen' is sent to the mobile terminal 1 from the content provider 27, and the Content Select Screen is displayed on the mobile terminal 1 screen (FIG. 3A).

As shown in the descriptive example in FIG. 3, the content noted on the Content Select Screen is linked to a CONFON request destination (WGW 11) to which various parameters such as a service ID (sid), a LID (license ID) specifying the rights object, an ol (object link) indicating the actual location of the media object (http://www.cp.com/melodyB.dcf in this example), and a notification destination (CPNotify) (http://www.cp.com/notify in this example) notifying that the rights object has been delivered normally, and the like are added.

When a user views the Content Select Screen and issues an instruction to purchase chargeable content, the '(3) CONFON request' is sent to the WGW 11. When the CONFON request is received at the WGW 11, the type of CONFON request is ascertained, and the '(4) Charging Authentication Screen' for the corresponding chargeable content is sent to the mobile terminal 1 via the WAP-GW/JSP 6. At this time, the WAP-GW/JSP 6 encrypts and sends a parameter including the current time information.

When a user views the Charging Authentication Screen (FIG. 3B), enters the password, and clicks the 'OK' button, the HTTP request '(5) DD Request' including the download descriptor (DD) acquisition request for downloading the media object (MO) of the content is sent.

The '(5) DD Request' is transferred to the TMS-C 18 of the DRM platform 16 via WAP-GW/JSP 6 and the WGW 11 (H-MAWG 12). At this time, a check is conducted in the WAP-GW/JSP 6 to determine whether or not the request has arrived within the prescribed time after the '(4) Charging Authentication Screen' is sent. If the prescribed time is exceeded, the request is assumed to be invalid, the error screen as shown in FIG. 3D is displayed on the mobile terminal 1, and the user is reminded to send the request again.

The WAP-GW/JSP 6 receiving the '(5) DD Request' from the mobile terminal 1 acquires mobile terminal information (UE Profile) comprising model information and information indicating performance for the mobile terminal, and user agent profile information (UA Profile) such as the web browser from the R2M 7, using the MSISDN or IMSI of the mobile terminal 1 as the key. At this time, the WAP-GW/JSP 6 also acquires the type of secure clock (time information held within the mobile terminal 1), the binding information of the permission to the MIME type to be changed, and the domain name for the associated region, as the DRM expansion information. The WAP-GW/JSP 6 then adds acquired mobile terminal information (UE Profile), user agent profile information (UA Profile), and DRM expansion information, to the HTTP header of the HTTP request, and sends the HTTP header to the TMS server 17 of the DRM platform 16 via the WGW 11 (H-MAWG 12).

The TMS server 17 receiving the HTTP request creates a download descriptor for downloading the requested content, and sends the download descriptor to the mobile terminal 1 as the HTTP response. At this time, the capacity of the mobile terminal 1 is checked, and a download descriptor corresponding to that capacity is created.

In other words, in the TMS server 17 of the DRM platform 16, the capacity of the mobile terminal 1 sending the HTTP request is checked based on the DRM expansion information included in the HTTP header, a download descriptor appropriate for the mobile terminal is created based on the HTTP request, and the '(6) DD Response' including the download descriptor is returned to the WGW 11.

As shown in FIG. 2, the object link (ol) is described as the parameter indicating the actual location of the content (ObjectURL), and the URL of the TMS server 17 (TMS notification URL), and the parameter (CPNotify), are described as the notification destination (InstallNotifyURL) for notification of completion of delivery of content, in the download descriptor.

The '(6) DD Response' including the download descriptor created with the TMS server 17 as described above is transferred to the mobile terminal 1 via the WGW 11 and the WAP-GW/JSP 6.

The content authentication screen shown in FIG. 3C is displayed on the display unit of the mobile terminal 1 receiving the '(6) DD Response'. Here, when a user clicks the 'OK' button to download the content, the content (media object) acquisition request '(7) MO Request' for the object URL in the download descriptor included in the '(6) DD Response' is sent, and the screen shown in FIG. 3E is displayed. When a user clicks the 'NG' button, the screen shown in FIG. 3F is displayed, and processing is halted.

The '(7) MO Request' is transferred via the DRM platform 16 and the WGW 11 to the content provider 27 storing the content.

The content provider 27 receiving the request transfers the '(8) MO Response' including the requested content (media object) to the mobile terminal 1 via the WGW 11, DRM platform 16, and WAP-GW/JSP 6.

When an error is detected in any server in this process, an error is displayed as shown in FIG. 3G, and downloading is halted. Furthermore, when downloading of the MO fails, the error shown in FIG. 3H is displayed.

When the mobile terminal 1 receives all media objects without detection of an error, the mobile terminal 1 sends the download complete notification '(9) Install Notify' to the TMS server 17 of the DRM platform 16 (the notification destination specified with the 'InstallNotifyURL' parameter) via the WAP-GW/JSP 6.

When the TMS server 17 receives '(9) Install Notify', the TMS server 17 returns the response '(10) Install Notify Ack', notifies the license server (LS) 21, and receives the corresponding rights object (RO). The TMS server 17 then delivers the rights object to the PPG 9, and the PPG 9 delivers the rights object to the mobile terminal 1 by WAP push ((11) RO Delivery).

At this time, the DRM platform 16 overwrites the permission information of the rights object in accordance with the capacity of the mobile terminal 1 sending the HTTP request, or does not deliver rights information. For example, the DRM platform 16 does not deliver rights objects including content usable time and content usable period to mobile terminals for which time information held internally can be readily changed by a user.

With the mobile terminal 1, the download completion screen (FIG. 3I) is displayed when push delivery of a rights object (RO) following download of a media object (MO) is complete. This content is then executed when execution of the content is directed by a user (FIG. 3J).

Furthermore, when the mobile terminal 1 receives a rights object, the mobile terminal 1 sends the '(12) Delivery Receipt' notifying the delivery status to the PPG 9. When the PPG 9 receives the '(12) Delivery Receipt', the PPG 9 creates the delivery result notification message 'Delivery Report' in accordance with that content, and sends the 'Delivery Report' to the DRM platform 16.

When the DRM platform 16 receives the delivery result notification message 'Delivery Report', the DRM platform 16 creates a log (reporting), evaluates whether or not the rights object has been successfully delivered, and only when delivery has been successful, creates a charging notification '(13) Charging Notify' including the charging parameter, and sends the charging notification '(13) Charging Notify' to the WGW 11. The WGW 11 receiving the charging notification conducts charging processing (CDR Create) based on the charging parameter included in the notification.

When a plurality of WGWs 11 is provided as described above, the charging notification is sent to the WGW 11 in the area associated with that mobile terminal using the domain name supplementing the host header of the HTTP request as described above.

Thus, charging is not conducted while delivery of the rights object is not complete.

Furthermore, when the parameter CP Notify is set, the completion of delivery of content notification '(14) CP Notify' is sent to the URL specified in that parameter (when delivery is successful). In the example in the figure, the completion of delivery of content notification is sent to 'http://www.cp.com/notify'. Thus, the content provider and the like can acquire in real-time information indicating that content has been delivered.

The case in which only rights objects being chargeable content are delivered is described below. In this case, media objects are delivered beforehand to user mobile terminal 1 by a variety of means.

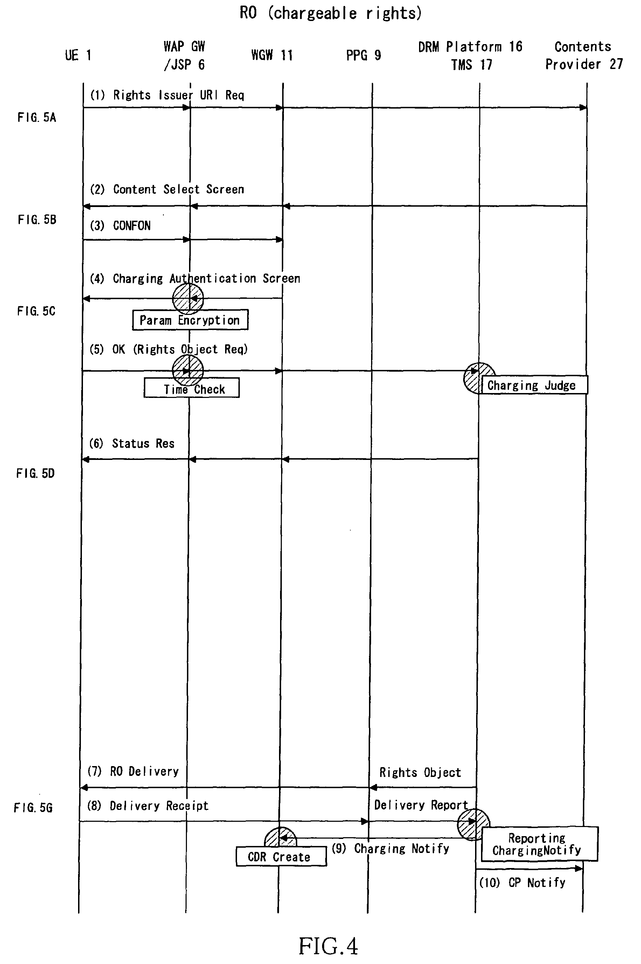

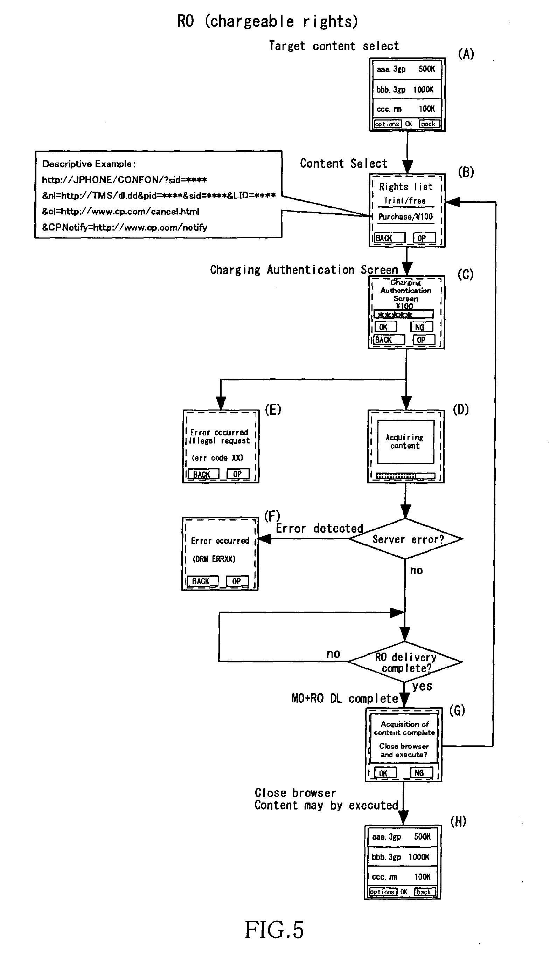

FIG. 4 shows the sequence when delivering only rights objects, and FIG. 5 shows an example of screen displays on a mobile terminal 1 at this time.

In FIG. 4, when a user selects rights object content for purchase in the target Content Select Screen (FIG. 5A), the '(1) Rights Issuer URL Request' is sent to the content provider 27. In response, the '(2) Content Select Screen' is sent to the mobile terminal 1 from the content provider 27. FIG. 5B shows an example of a Content Select Screen. As shown in the figure, the CONFON request destination (WGW 11) to which parameters such as the service ID (sid), the LID specifying the rights object, and the notification destination (CPNotify) to which normal delivery of the rights object is notified (http://www.cp.com/notify in this example)
and the like are added is linked to the point at which content is purchased.

When a user selects purchase on this screen, the '(3) CONFON Request' is sent from the mobile terminal 1 as in the case in FIG. 2, and the corresponding '(4) Charging Authentication Screen' is sent from the WGW 11 to the mobile terminal 1. At this time, as described above, the parameters are encrypted by WAP-GW/JSP 6 and sent.

When a user enters the password in the Charging Authentication Screen shown in FIG. 5C and clicks the 'OK' button, the rights object delivery request '(5) OK (Rights Object Request)' is sent to the TMS server 17 of the DRM platform 16 via the WAP-GW/JSP 6 and the WGW 11. At this time, a timeout check is conducted in the WAP-GW/JSP 6 as described above.

The DRM platform 16 (TMS server 17) receiving this '(5) OK (Rights Object Request)' conducts a charging check and sends the result information '(6) Status Response' to the mobile terminal 1.

Display corresponding to this '(6) Status Response' is displayed on the display unit of the mobile terminal 1. FIG. 5D shows an example screen when no error has occurred, and FIG. 5E shows an example screen when an error has occurred.

When no problems are found as a result of the charging check, the DRM platform 16 (TMS server 17) receives the rights object requested from the license server (LS) 21, and sends the rights object to the PPG 9 for delivery to the mobile terminal 1. Thus, the rights object is delivered from the PPG 9 to the mobile terminal 1 ('(7) RO Delivery').

FIG. 5F shows the display screen when an error occurs during delivery of a rights object. When delivery of the rights object is complete, a screen (FIG. 5G) showing completion of delivery is displayed on the display unit of the mobile terminal 1, and when a user specifies execution of the content, that content is executed (FIG. 5H).

Furthermore, as described above, when the mobile terminal 1 receives the requested rights object, the mobile terminal 1 sends the '(8) Delivery Receipt' notifying the delivery status to the PPG 9. When the PPG 9 receives the '(8) Delivery Receipt', the PPG 9 creates the delivery result notification message 'Delivery Report' in accordance with that content, and transfers the 'Delivery Report' to the DRM platform 16 (TMS server 17).

When the DRM platform 16 receives the delivery result notification message 'Delivery Report' a log is created (reporting), an evaluation is conducted to determine whether or not the rights object has been delivered, a charging notification '(9) Charging Notify' including the charging parameter is created (only when delivery is successful), and sent to the WGW 11. The WGW 11 receiving the charging notification conducts charging processing (CDR Create) based on the charging parameter included in the notification.

Furthermore, when the parameter CPNotify is set, the completion of delivery of content notification '(10) CP Notify' is sent (when delivery is successful) to the URL specified in that parameter. In the example shown in the figure, the completion of delivery of content notification is sent to 'http://www.cp.com/notify'. Thus, the content provider and the like can acquire in real-time information indicating that content has been delivered.

Thus, in this case as well, charging is not conducted while delivery of the rights object is not yet complete.

The case in which free content is downloaded is described below.

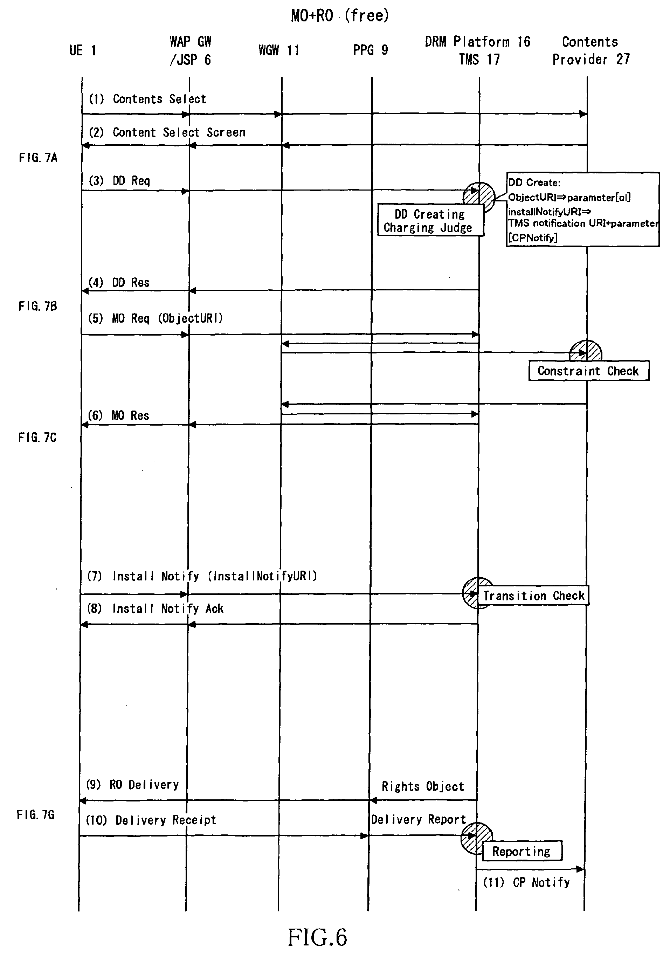

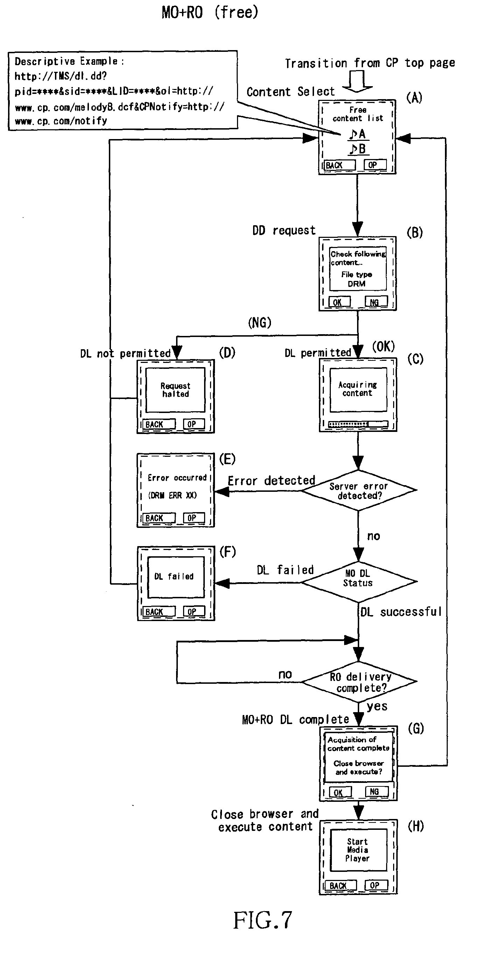

FIG. 6 shows the sequence when a user of the mobile terminal 1 downloads a free media object (MO) and rights object (RO) in a series of sequences, and FIG. 7 shows an example of screen displays on the mobile terminal 1 at this time.

In FIG. 6, the mobile terminal 1 being a WAP-compatible terminal connects to the Internet in accordance with the WAP sequence. When a user attempts to download content from the content provider 27 by requesting '(1) Content Select', the '(2) Content Select Screen' is sent from the content provider 27 to the mobile terminal 1, and the Content Select Screen is displayed on the mobile terminal 1 screen (FIG. 7A).

As shown in the descriptive example in FIG. 7, the content noted on the Content Select Screen is linked to the TMS server 17 to which various parameters such as a service ID (sid), a LID (license ID) specifying the rights object, an ol (object link) indicating the actual location of the media object (http://www.cp.com/melodyB.dcf in this example), and a notification destination (CPNotify) (http://www.cp.com/notify in this example) notifying that the rights object has been delivered normally, and the like are added.

When user views the Content Select Screen and selects the desired content, the HTTP request '(3) DD Request' including the download descriptor (DD) acquisition request for downloading the content being a media object (MO) is sent.

The '(3) DD Request' is transferred to the TMS-C 18 of the DRM platform 16 via the WAP-GW/JSP 6 and the WGW 11 (H-MAWG 12).

Here, the WAP-GW/JSP 6 receiving the '(3) DD Request' from the mobile terminal 1 acquires mobile terminal information (UE Profile) comprising model information and information indicating performance for the mobile terminal, and user agent profile information (UA Profile) such as the web browser from the R2M 7, using the MSISDN or IMSI of the mobile terminal 1 as the key. At this time, the WAP-GW/JSP 6 also acquires the type of secure clock (time information held within the mobile terminal 1), and the binding information of the permission to the MIME type to be changed as DRM expansion information. The WAP-GW/JSP 6 then adds acquired mobile terminal information (UE Profile), user agent profile information (UA Profile), and DRM expansion information, to the HTTP header of the HTTP request, and sends the HTTP header to the TMS server 17 of the DRM platform 16 via the WGW 11 (H-MAWG 12).

The TMS server 17 receiving the HTTP request creates a download descriptor for downloading the requested content, and sends the download descriptor to the mobile terminal 1 as the HTTP response. At this time, the capacity of the mobile terminal 1 is checked, and a download descriptor corresponding to that capacity is created.

In other words, in the TMS server 17 of the DRM platform 16, the capacity of the mobile terminal 1 sending the HTTP request is checked based on the DRM expansion information included in the HTTP header, a download descriptor appropriate for the mobile terminal is created based on the HTTP request, and the '(6) DD Response' including the download descriptor is returned to the WGW 11.

As shown in FIG. 6, the object link (ol) is described as the parameter (ObjectURL) indicating the actual location of the content, and the URL of the TMS server 17 (TMS notification URL), and the parameter (CPNotify), are described as the notification destination (InstallNotifyURL) for notification of completion of delivery of content, in the download descriptor.

The '(4) DD Response' including the download descriptor created with the TMS server 17 as described above is transferred to the mobile terminal 1 via the WGW 11 and the WAP-GW/JSP 6.

As shown in FIG. 7B, the content authentication screen is displayed on the display unit of the mobile terminal 1 receiving the '(4) DD Response'. Here, when a user clicks the 'OK' button to download the content, the content (media object) acquisition request the '(5) MO Request' is sent to the object URL in the download descriptor included in the '(4) DD Response', and the screen shown in FIG. 7C is displayed. When a user clicks the 'NG' button, the screen shown in FIG. 7D is displayed, and processing is halted.

The '(5) MO Request' is transferred via the DRM platform 16 and the WGW 11 to the content provider 27 storing the content.

The content provider 27 receiving the request transfers the '(6) MO Response' including the requested content (media request) to the mobile terminal 1 via the WGW 11, DRM platform 16, and WAP-GW/JSP 6. When the number of downloads is constrained and the like, the number of downloads is checked (Constraint Check), and the '(6) MO Response' is returned.

When an error is detected in any server in this process, an error is displayed as shown in FIG. 7E, and downloading is halted. When downloading of the MO fails, the error shown in FIG. 7F is displayed.

When the mobile terminal 1 receives all media objects without detection of an error, the mobile terminal 1 sends the download complete notification '(7) Install Notify' to the TMS server 17 of the DRM platform 16 (the notification destination specified with the 'InstallNotifyURL' parameter) via the WAP-GW/JSP 6.

When the TMS server 17 receives '(7) Install Notify', the TMS server 17 returns the response '(8) Install Notify Ack', notifies the license server (LS) 21, and receives the corresponding rights object (RO). The TMS server 17 then delivers the rights object to the PPG 9, and the PPG 9 delivers the rights object to the mobile terminal 1 by WAP push ((9) RO Delivery).

At this time, the DRM platform 16 overwrites the permission information of the rights object in accordance with the capacity of the mobile terminal 1 sending the HTTP request, or does not deliver rights information. For example, the DRM platform 16 does not deliver rights objects including content usable time and content usable period to mobile terminals for which time information held internally can be readily changed by a user.

The download completion screen (FIG. 7G) is displayed on the mobile terminal 1 when push delivery of a rights object (RO) following download of a media object (MO) is complete. This content is then executed when execution of the content is directed by a user (FIG. 7H). When 'NG' is selected on the screen shown in FIG. 7G, processing returns to the Content Select Screen in FIG. 7A.

Furthermore, when the mobile terminal 1 receives a rights object, the mobile terminal 1 sends the '(10) Delivery Receipt' notifying the delivery status to the PPG 9. When the PPG 9 receives the '(10) Delivery Receipt', the PPG 9 creates the delivery result notification message 'Delivery Report' in accordance with that content, and sends the 'Delivery Report' to the DRM platform 16.

When the DRM platform 16 receives the delivery result notification message 'Delivery Report', the DRM platform 16 creates a log (reporting), evaluates whether or not the rights object has been successfully delivered, and when delivery has been successful, sends the completion of delivery of content notification '(11) CP Notify' to the URL specified in the parameter 'CPNotify'. In the example in the figure, the completion of delivery of content notification is sent to 'http://www.cp.com/notify'. Thus, the content provider and the like can acquire in real-time information indicating that content has been delivered.

By changing the parameter 'CPNotify', the destination of the completion of delivery notification can be set as desired.

The case in which only rights objects being free content are delivered is described below. In this case, media objects are delivered beforehand to user mobile terminals mobile terminal 1 by a variety of means.

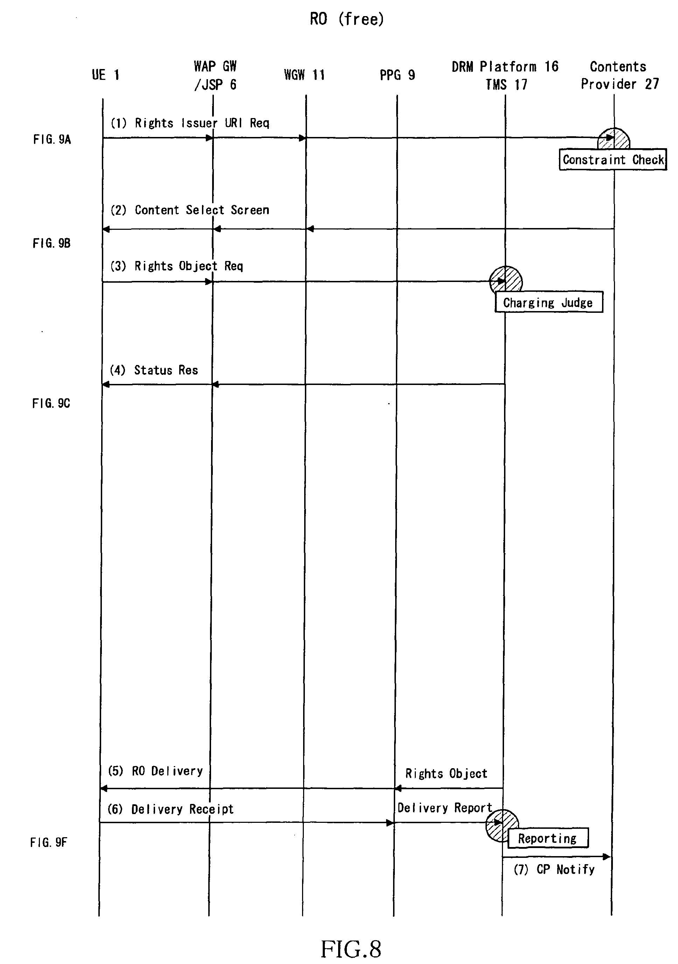

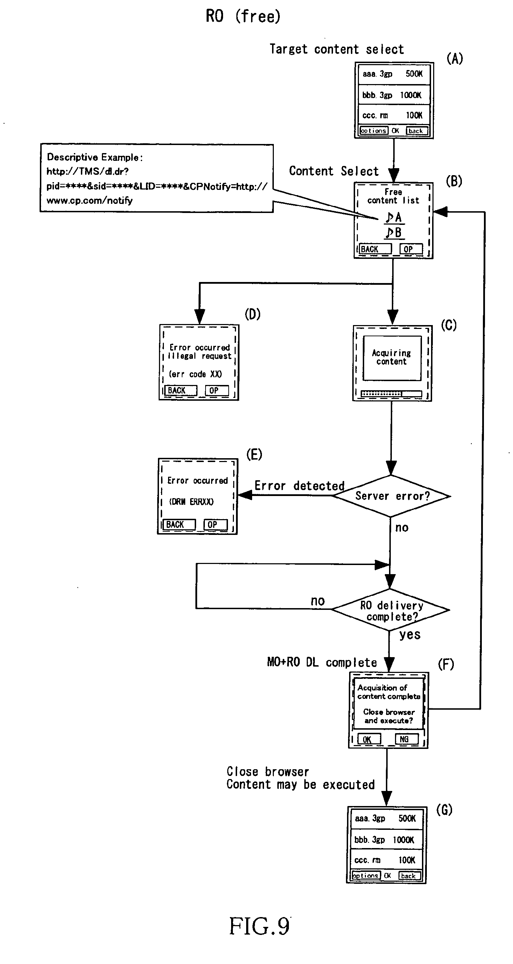

FIG. 8 shows the sequence when delivering only rights objects, and FIG. 9 shows an example of screen displays on a mobile terminal 1 at this time.

In FIG. 8, when a user selects rights object content for download in the target Content Select Screen (FIG. 9A), the '(1) Rights Issuer URL Request' is sent to the content provider 27. In response, the '(2) Content Select Screen' is sent to the mobile terminal 1 from the content provider 27. When the number of downloads is constrained and the like, the number of downloads is checked (Constraint Check).

FIG. 9B shows an example of a Content Select Screen. As shown in the figure, the TMS server 17 to which parameters such as the service ID (sid), the LID (License ID) specifying the rights object, and the notification destination (CPNotify) to which normal delivery of the rights object is notified (http://www.cp.com/notify in this example) and the like are added, are linked to the content.

When a user selects content on this screen, the '(3) Rights Object Request' is sent to the TMS server 17 of the DRM platform 16 via the WAP-GW/JSP 6 and the WGW 11.

The DRM platform 16 (TMS server 17) receiving this '(3) (Rights Object Request)' conducts a service ID check and the like, and sends the result information '(4) Status Response' to the mobile terminal 1.

Display corresponding to the '(4) Status Response' is displayed on the display unit of the mobile terminal 1. An error is displayed as in FIG. 9D when an error is detected, or when the '(4) Status Response' could not be received despite the prescribed time having elapsed, and the screen in FIG. 9C is displayed when an error has not occurred.

Furthermore, when no problems are found as a result of the charging check, the DRM platform 16 (TMS server 17) receives the requested rights object from the license server (LS) 21, and sends the rights object to the PPG 9 for delivery to the mobile terminal 1. Thus, the rights object is delivered from the PPG 9 to the mobile terminal 1 '(5) RO Delivery'.

A screen such as that shown in FIG. 9E is displayed when an error occurs during delivery of a rights object. When delivery of the rights object is completed without occurrence of an error, a screen (FIG. 9F) showing completion of delivery is displayed on the display unit of the mobile terminal 1, and when a user specifies execution of the content, that content is executed (FIG. 9G). When 'NG' is selected on the screen shown in FIG. 9F, processing returns to the Content Select Screen shown in FIG. 9B.

Furthermore, when the mobile terminal 1 receives the requested rights object, the mobile terminal 1 sends the '(6) Delivery Receipt' notifying the delivery status to the PPG 9. When the PPG 9 receives the '(6) Delivery Receipt', the PPG 9 creates the delivery result notification message 'Delivery Report' in accordance with that content, and sends the 'Delivery Report' to the DRM platform 16 (TMS server 17).

When the DRM platform 16 receives the delivery result notification message 'Delivery Report', the DRM platform 16 creates a log (reporting), evaluates whether or not the rights object has been successfully delivered, and when delivery has been successful, sends the completion of delivery of content notification '(7) CP Notify' to the URL specified in the parameter 'CP Notify'. In the example in the figure, the completion of delivery of content notification is sent to 'http://www.cp.com/notify'. Thus, the content provider and the like can acquire in real-time information indicating that content has been delivered.

## Claims

1. A server connected to a gateway server, which performs processing related to charging and is provided between a mobile communications network and an IP network such as the Internet and the like, the server delivering corresponding content to a mobile terminal in accordance with a content acquisition request by separate delivery from the mobile terminal, and comprising:
means for delivering a rights object to the mobile terminal when the content acquisition request from the mobile terminal is a rights object acquisition request;
means for sending a download descriptor related to a media object to the mobile terminal, and delivering a rights object corresponding to the media object to the mobile terminal after receiving a download complete notification (Install Notify) for the media object, when the content acquisition request from the mobile terminal is a media object and rights object acquisition request; and
means for sending a charging notification (Charging Notify) to the gateway server after completion of delivery of the rights object to the mobile terminal, when the content is chargeable content.

2. The server according to Claim 1, comprising means for notifying a prescribed notification destination of a notification of completion of delivery of content (CP Notify) after completion of delivery of the rights object to the mobile terminal.

3. The server according to Claim 1 or Claim 2, wherein verification of completion of delivery of the rights object to the mobile terminal is based on a delivery status notification (Delivery Receipt) sent from the mobile terminal.

4. The server according to Claim 1, comprising a plurality of gateway servers, wherein the means for sending the charging notification sends the charging notification to the gateway server corresponding to the mobile terminal.

5. The server according to Claim 4, wherein the means for sending the charging notification uses a domain name indicating the region to which a user of the mobile terminal supplemented with the host header of a HTTP request from the mobile terminal belongs, and sends the charging notification to the gateway server corresponding to the mobile terminal.

6. The server according to Claim 2, wherein the notification destination of the notification of completion of delivery of content (CP Notify) is a notification destination noted in the download descriptor.
